# EUROPEAN PATENT APPLICATION

(11) **EP 4 749 886 A1**
(43) Date of publication of application: **27.05.2026**
(21) Application number: 24844808.6
(22) Date of filing: 24.07.2024
(51) Int. Cl.: H02J 13/00

(54) **ELECTRIC-POWER SECONDARY CONTROL PROTECTION APPARATUS BASED ON POWERVPX ARCHITECTURE, AND ELECTRIC-POWER SECONDARY DEVICE BASED ON POWERVPX ARCHITECTURE**

(30) Priority: 25.07.2023 CN 202310922061; 25.07.2023 CN 202310925541
(71) Applicant: Contemporary Amperex Future Energy Research Institute (Shanghai) Limited, Shanghai 200241 (CN); Contemporary Amperex Technology Co., Limited, Ningde, Fujian 352100 (CN)
(72) Inventor: LU, Yanhua, Shanghai 200241 (CN); YU, Dongxu, Shanghai 200241 (CN); DING, Yi, Shanghai 200241 (CN)
(74) Representative: Gong, Jinping
(86) International application number: PCT/CN2024/107315
(87) International publication number: WO 2025/021117

(57) **Abstract**

This application provides a secondary power control and protection apparatus and a secondary power device based on a PowerVPX architecture. A backplane of the secondary power control and protection apparatus includes a power connector connected to a power bus; a first data connector connected to a single-ended signal transmission bus; a second data connector connected to a differential signal transmission bus; and a third data connector connected to a high-speed signal transmission bus. By providing the first data connector, the second data connector, and the third data connector in the backplane, the data transmission bandwidth of the backplane of the secondary power control and protection apparatus is increased, improving the data exchange capability of the secondary power control and protection apparatus. A secondary power device based on a PowerVPX system architecture is further provided. The PowerVPX system architecture includes five planes: a power plane, an electrical plane, a data plane, a protection plane, and a control plane, effectively unifying the connection standards between secondary power devices and improving the compatibility and scalability of secondary power devices.

## Description

This application claims priority to Chinese Patent Application No. 202310922061.2 entitled "SECONDARY POWER CONTROL AND PROTECTION APPARATUS BASED ON POWERVPX ARCHITECTURE" and Chinese Patent Application No. 202310925541.4 entitled "SECONDARY POWER DEVICE BASED ON POWERVPX SYSTEM ARCHITECTURE", which are filed on July 25, 2023 with the National Intellectual Property Administration, and incorporated herein by reference with their entireties.

### TECHNICAL FIELD

This application relates to the field of electrical technology, in particular to a secondary power control and protection apparatus and a secondary power device based on a PowerVPX architecture.

### BACKGROUND

Primary power devices refer to high-voltage electrical devices directly used in production processes such as production, transmission, and distribution of electrical energy. Secondary power control and protection apparatuses are auxiliary devices for controlling, regulating, and protecting primary power devices.

Secondary power control and protection apparatuses typically have relay protection and control functions.

Since various interfaces in secondary power devices are defined independently by manufacturers, there are no unified connectors or interfaces for secondary power devices produced by different manufacturers, resulting in poor compatibility and scalability.

The communication rate of backplanes in current secondary power control and protection apparatuses is typically around 100 Mbps. With the continuous increase in communication bandwidth and the increasing requirements on real-time data processing performance, there is an urgent need to increase the communication rate of backplanes in secondary power control and protection apparatuses.

### TECHNICAL PROBLEM

This application provides a secondary power control and protection apparatus based on a PowerVPX architecture and a backplane of the secondary power control and protection apparatus, to address the issue of limited transmission rates of backplanes in secondary power control and protection apparatuses in the prior art. The application further provides a secondary power device and a PowerVPX system architecture thereof, to address the issue of poor compatibility and scalability in secondary power devices in the prior art.

### TECHNICAL SOLUTION

To achieve the above objectives, this application adopts the following technical solutions.

In a first aspect, a backplane based on a PowerVPX architecture is provided, including:
a power connector, connected to a power bus and configured to transmit power signals;
a first data connector, connected to a single-ended signal transmission bus configured to transmit single-ended signals;
a second data connector, connected to a differential signal transmission bus configured to transmit differential signals; and
a third data connector, connected to a high-speed signal transmission bus configured to transmit high-speed signals.

In this embodiment of this application, based on the characteristics of secondary power control and protection apparatuses, the backplane is provided with a first data connector, a second data connector, and a third data connector based on the PowerVPX architecture, single-ended signals are transmitted via a single-ended signal transmission bus, and differential signals are transmitted via a differential signal transmission bus, enabling signal transmission between various functional boards of the secondary power control and protection apparatus to better resist strong electromagnetic interference. Additionally, based on the characteristic that a VPX bus can support high-speed serial communication protocols, high-speed signals are transmitted via the third data connector, increasing the data transmission bandwidth of the backplane of the secondary power control and protection apparatus, thereby addressing the issue of data bandwidth limitations between functional boards in current secondary power control and protection apparatuses, improving the data exchange capability of secondary power control and protection apparatuses, and enhancing data throughput.

In one embodiment of the first aspect, the backplane includes a power board slot and a universal board slot;
the power board slot is used for inserting a power board; and
the universal board slot is used for inserting an input/output universal board.

The universal board includes at least one of an input board, an output board, and a communication board.

In this embodiment of this application, by providing the universal board slot, during the design of other boards except the power board, all functional boards can be designed according to unified board specifications, improving the compatibility and scalability of the functional boards in the secondary power control and protection apparatus.

In one embodiment of the first aspect, a distribution spacing of several universal board slots is greater than a preset interference distance.

In this embodiment of this application, during backplane layout, the distribution spacing between the data board slots is set to be relatively large to minimize coupling between planes.

In a second aspect, a secondary power control and protection apparatus is provided. The secondary power control and protection apparatus includes various functional boards and the backplane as described in any one of the first aspect; and
each of the functional boards is inserted into the backplane, and power signals, single-ended signals, differential signals, and high-speed signals between the functional boards are transmitted via the backplane.

In this embodiment of this application, the secondary power control and protection apparatus utilizes the foregoing backplane, and the functional boards are inserted into the backplane, so that the functional boards can be selected based on actual needs and inserted into the backplane, achieving modularity, universality, and plug-and-play functionality of the boards. Single-ended signals between the functional boards can be transmitted via a single-ended signal transmission bus, and differential signals between the functional boards can be transmitted via a differential signal transmission bus, enabling signal transmission between the functional boards of the secondary power control and protection apparatus to better resist strong electromagnetic interference. Additionally, based on the characteristic that a VPX bus can support high-speed serial communication protocols, high-speed signals are transmitted via the third data connector, increasing the data transmission bandwidth between the functional boards of the secondary power control and protection apparatus, thereby addressing the issue of data bandwidth limitations between the functional boards in current secondary power control and protection apparatuses, improving the data exchange capability of secondary power control and protection apparatuses, and enhancing data throughput.

In one embodiment of the second aspect, the functional boards include a power board; and
the power board is connected to the power connector and configured to generate and output power signals.

In one embodiment of the second aspect, the functional boards include at least two power boards; and each of the power boards is independently connected to the power connector.

The redundant design of the power boards allows for more reliable power supply of the secondary power protection and control apparatus.

In one embodiment of the second aspect, the functional boards further include a control management board and an input/output universal board; and
the control management board is connected to the input/output universal board via the first data connector, where single-ended signals are transmitted via a single-ended signal transmission bus.

The single-ended signal transmission bus includes a CAN bus.

In this embodiment of this application, the control management board implements monitoring and control of other boards in the secondary power control and protection apparatus through the single-ended signals, achieving inter-board monitoring and inter-board maintenance.

In one embodiment of the second aspect, the control management board is connected to the input/output universal board via the second data connector, where differential signals are transmitted via a differential signal transmission bus.

The differential signal transmission bus includes a low-voltage differential signal bus.

In one embodiment of the second aspect, the input/output universal board includes a communication board; and
the control management board is connected to the communication board via the third data connector, where high-speed signals are transmitted via a high-speed signal transmission bus.

The high-speed signal transmission bus includes a high-speed serial communication bus.

In this embodiment of this application, a high-speed signal transmission channel is established for separation of a data channel and a control channel, increasing the data transmission bandwidth of the secondary power control and protection apparatus, improving the data transmission efficiency of the secondary power control and protection apparatus, and increasing the data throughput of the secondary power control and protection apparatus.

In one embodiment of the second aspect, the control management board includes a first control module and a second control module;
the first control module is used for task management, data transmission management, and data communication processing based on the differential signals and the high-speed signals; and
the second control module is used for board status monitoring based on the single-ended signals.

In this embodiment of this application, the design of the double control modules improves the data processing efficiency of the control management board.

In one embodiment of the second aspect, the input/output universal board includes a data sending and reception processing module and a board parameter monitoring module;
the data sending and reception processing module is used for data sending and reception; and
the board parameter monitoring module is configured to acquire operating parameters of the input/output universal board.

In this embodiment of this application, the design of the double modules improves the data processing efficiency of the input/output universal board.

In one embodiment of the second aspect, the secondary power control and protection apparatus further includes a chassis; and the backplane and the functional boards are disposed within the chassis.

The chassis includes a 4U chassis.

In a third aspect, a PowerVPX system architecture is provided, and applied to a secondary power device. The PowerVPX system architecture includes:
a power plane for transmitting and processing power signals;
an electrical plane for transmitting and processing high-voltage signals;
a data plane for transmitting and processing high-speed signals;
a protection plane for transmitting and processing single-ended signals; and
a control plane for transmitting and processing differential signals.

In this embodiment of this application, the PowerVPX system architecture for a secondary power device is divided into five planes: a power plane, an electrical plane, a data plane, a protection plane, and a control plane. Each plane corresponds to transmission and processing of a specific type of data, providing a standardized architecture for connection and data transmission between secondary power devices, effectively unifying connection standards between secondary power devices, and improving the compatibility and scalability of secondary power devices. Additionally, in consideration of the characteristic of strong electromagnetic interference in the usage scenarios of secondary power devices, the electrical plane is provided to transmit high-voltage signals in secondary power devices, and the protection plane is provided to transmit single-ended signals such as locking signals, alarm signals, and time synchronization signals in secondary power devices, effectively enhancing the reliability of secondary power devices in strong electromagnetic interference scenarios.

In a fourth aspect, a secondary power device is provided. The secondary power device includes:
a power module for generating power signals and transmitting the power signals via a power plane;
a collection module for collecting alternating-current signals and/or alternating-current voltage signals, converting the alternating-current signals and/or alternating-current voltage signals via an electrical plane to obtain low-voltage signals, and outputting the low-voltage signals to a control module;
a communication module for real-time communication with an external device via a data plane;
an operation module for performing opening or closing operations based on high-voltage signals transmitted via the electrical plane; and
a control module for transmitting differential signals to the collection module, the communication module, and the operation module via a control plane, and transmitting single-ended signals to the power module, the collection module, the communication module, and the operation module via a protection plane.

In this embodiment of this application, data transmission and processing between various modules of the secondary power device are achieved through the power plane, electrical plane, data plane, protection plane, and control plane, improving the compatibility and scalability of the secondary power device.

In one embodiment of the fourth aspect, the secondary power device includes a backplane and various functional boards;
each of the functional boards is inserted into the backplane; and
the backplane is configured to provide transmission and processing channels for the power signals, high-voltage signals, high-speed signals, single-ended signals, and differential signals, respectively.

In this embodiment of this application, by providing transmission channels for various signals on the backplane, the PowerVPX system architecture for the secondary power device is constructed using the backplane. Functional boards can be selected based on actual needs and inserted into the backplane, achieving modularity, universality, and plug-and-play functionality of the boards.

In one embodiment of the fourth aspect, the power module includes a power board; and
the power board is configured to generate power signals and output the power signals via a power signal transmission channel provided by the backplane.

In this embodiment of this application, the function of the power plane is achieved through the selection of the functional boards, thereby meeting the power supply needs of the secondary power device.

In one embodiment of the fourth aspect, the power module includes a power board, the operation module includes an operation board, the collection module includes a collection board, and the control module includes a control board;
the power board is configured to output direct-current high-voltage signals to the operation board; and
the collection board is configured to collect alternating-current signals and/or alternating-current voltage signals, the electrical plane is further configured to convert the alternating-current signals and/or alternating-current voltage signals into low-voltage signals, and the low-voltage signals are outputted to the control board via the high-voltage signal transmission channel provided by the backplane.

The collection board includes an alternating current collection board and an alternating-current voltage collection board.

The operation board includes an A-phase operation board, a B-phase operation board, and a C-phase operation board.

In this embodiment of this application, based on the characteristics of the secondary power device, the functions of the electrical plane are achieved using corresponding functional boards, enabling parameter measurement and electrical control, and effectively enhancing the reliability of the secondary power device in strong electromagnetic interference scenarios.

In one embodiment of the fourth aspect, the communication module includes a communication board and a control board; and
the communication board is configured to interact with a control background, receive or send the high-speed signals, and transmit the received high-speed signals to the control board via the data plane provided by the backplane.

In this embodiment of this application, a high-speed signal transmission channel is provided for separation of a data channel and a control channel, enabling high-speed signal transmission via the data plane.

In one embodiment of the fourth aspect, the control module includes a control board, the operation module includes an input board, an output board, and an operation board, the communication module includes a communication board, the collection module includes a collection board, and the power module includes a power board; and
the control board respectively interacts with the input board, the output board, the communication board, the collection board, the operation board, and the power board via the protection plane for single-ended signal interaction.

In this embodiment of this application, the protection plane enables the control board to monitor and control other boards in the secondary power device, achieving inter-board monitoring and inter-board maintenance.

In one embodiment of the fourth aspect, the control board is respectively in communication connection with the input board, the output board, the communication board, the collection board, the operation board, and the power board via a CAN bus.

The CAN bus is arranged through the backplane, and the CAN bus is used to achieve single-ended signal transmission, also enhancing the reliability of the secondary power device in strong electromagnetic interference scenarios.

In one embodiment of the fourth aspect, the control module includes a control board, the operation module includes an input board and an output board, the communication module includes a communication board, and the collection module includes a collection board; and
the control board respectively interacts with the input board, the output board, the communication board, and the collection board via the control plane for differential signal interaction.

In one embodiment of the fourth aspect, the control board is further configured to perform program upgrading for the input board, the output board, the communication board, and the collection board, respectively.

In this embodiment of this application, the control plane enables the control board to transmit differential data of other boards in the secondary power device, achieving inter-board control and board upgrading.

In one embodiment of the fourth aspect, the control board is respectively in communication connection with the input board, the output board, the communication board, and the collection board via a low-voltage differential signal bus.

In one embodiment of the fourth aspect, the backplane includes a power board slot and several data board slots;
the power board slot is used for inserting the power board; and
each data board slot is used for inserting any functional board of a control board, an input board, an output board, a communication board, a collection board, and an operation board.

In this embodiment of this application, unified and standardized interfaces are achieved through unified data board slots. Even secondary power devices produced by different manufacturers can use the same data board slots, thereby improving the compatibility and scalability of the secondary power devices.

In one embodiment of the fourth aspect, data connection channels of the several data board slots are the same.

In one embodiment of the fourth aspect, a distribution spacing of the several data board slots is greater than a preset interference distance.

The preset interference distance is a slot spacing that can reduce coupling between the planes, and the preset interference distance can be set based on the application environment.

In this embodiment of this application, during backplane layout, a distribution spacing between data board slots is set to be relatively large to minimize coupling between the planes.

In one embodiment of the fourth aspect, the secondary power device further includes a chassis; and the backplane is disposed within the chassis.

### DESCRIPTION OF DRAWINGS

By reading the detailed description of the preferred embodiments below, various other advantages and benefits will become apparent to those skilled in the art. The drawings are provided merely for illustrating the preferred embodiments and are not intended to limit the application. Throughout the drawings, the same reference numerals denote the same components. In the drawings:
FIG. 1 is a schematic diagram of a backplane based on a PowerVPX architecture according to an embodiment of this application;
FIG. 2 is a schematic structural diagram of a secondary power control and protection apparatus according to an embodiment of this application;
FIG. 3 is a schematic structural diagram of a secondary power control and protection apparatus according to an embodiment of this application;
FIG. 4 is a schematic structural diagram of a secondary power control and protection apparatus according to another embodiment of this application;
FIG. 5 is a schematic architecture diagram of data transmission between a control management board and an input/output universal board of a secondary power control and protection apparatus according to an embodiment of this application;
FIG. 6 is a schematic diagram of signal transmission between various functional boards and buses in a secondary power control and protection apparatus according to an embodiment of this application;
FIG. 7 is a schematic diagram of a data transmission architecture between a control management board and an input/output universal board of a secondary power control and protection apparatus according to another embodiment of this application;
FIG. 8 is a schematic architecture diagram of a PowerVPX system architecture of a secondary power device according to an embodiment of this application;
FIG. 9 is a schematic structural diagram of a secondary power device according to an embodiment of this application;
FIG. 10 is a schematic diagram of a backplane and a functional board of a secondary power device according to an embodiment of this application;
FIG. 11 is a schematic architecture diagram of a power plane of a secondary power device according to an embodiment of this application;
FIG. 12 is a schematic architecture diagram of an electrical plane of a secondary power device according to an embodiment of this application;
FIG. 13 is a schematic architecture diagram of a data plane of a secondary power device according to an embodiment of this application;
FIG. 14 is a schematic architecture diagram of a protection plane of a secondary power device according to an embodiment of this application;
FIG. 15 is a schematic architecture diagram of a control plane of a secondary power device according to an embodiment of this application; and
FIG. 16 is a schematic architecture diagram of Application Example 1 of a secondary power device according to an embodiment of this application.

### DESCRIPTIONS OF EMBODIMENTS

The embodiments are provided merely to illustrate the technical solutions of this application more clearly and are not intended to limit the protection scope of this application.

Unless otherwise defined, all technical and scientific terms used herein have the same meaning as commonly understood by those skilled in the technical field of this application; the terms used herein are for the purpose of describing specific embodiments only and are not intended to limit this application; and the terms "include", "comprise", and any variations thereof in the specification, claims, and descriptions of the drawings in this application are intended to cover non-exclusive inclusion.

In the description of the embodiments of this application, the technical terms "first", "second", and the like are merely used to distinguish between different objects and should not be understood as indicating or implying relative importance or implying the number, specific order, or primary-secondary relationship of the indicated technical features. In the description of the embodiments of this application, the term "multiple" means two or more unless explicitly defined otherwise.

Reference to "embodiment" herein means that a particular feature, structure, or characteristic described in connection with the embodiment may be included in at least one embodiment of this application. The appearance of this phrase in various places in the specification does not necessarily refer to the same embodiment, nor is it a separate or alternative embodiment mutually exclusive with other embodiments. Those skilled in the art explicitly and implicitly understand that the embodiments described herein may be combined with other embodiments.

In the description of the embodiments of this application, the term "and/or" merely describes an association relationship of associated objects, indicating that three relationships may exist. For example, A and/or B may indicate: only A exists, both A and B exist, or only B exists. Additionally, the character "/" generally indicates an "or" relationship between the contextually associated objects.

Primary power devices refer to high-voltage electrical devices directly used in production processes such as production, transmission, and distribution of electrical energy. Secondary power control and protection apparatuses are auxiliary devices for controlling, regulating, and protecting primary power devices.

Secondary power control and protection apparatuses typically have relay protection and control functions.

However, the communication rate of backplanes in current secondary power control and protection apparatuses is typically around 100 Mbps. With the continuous increase in communication bandwidth and the increasing requirements on real-time data processing performance, there is an urgent need to increase the communication rate of backplanes in secondary power control and protection apparatuses.

The VPX bus standard is a new-generation high-speed serial bus standard proposed by the VME (Versa Module Eurocard) International Trade Association (VME International Trade Association, VITA) based on VME buses. The OpenVPX system standard is proposed based on the VPX bus. The OpenVPX system standard supports the VITA46 standards and also supports the latest high-speed serial bus technologies such as RapidIO, PCI-Express, and 10-Gigabit Ethernet. The OpenVPX system standard is primarily used in computer embedded systems, providing standardized access for computer embedded systems and supporting higher backplane rates.

To increase the transmission rate of backplanes in secondary power control and protection apparatuses, it is possible to apply the OpenVPX system standard to backplanes of secondary power control and protection apparatuses. However, since secondary power control and protection apparatuses are mainly used in transformer substations, their application environments experience various electromagnetic interferences, such as transient electromagnetic interference from the opening/closing of high-voltage electrical devices, transient electromagnetic interference from short-circuit faults, and interference from magnetic fields, radiation fields, and electrostatic fields around electrical devices. Due to these electromagnetic interferences, the OpenVPX system standard cannot be directly applied in consideration of interface standardization for secondary power control and protection apparatuses.

Based on the above considerations, to increase the transmission rate of backplanes in secondary power control and protection apparatuses, the embodiments of this application propose a backplane based on PowerVPX and appliable to a secondary power control and protection apparatus, as well as a secondary power control and protection apparatus, based on the existing OpenVPX system standard. The backplane based on a PowerVPX architecture is provided with a power connector, a first data connector, a second data connector, and a third data connector; single-ended signals are transmitted via a single-ended signal transmission bus; and differential signals are transmitted via the differential signal transmission bus, enabling signal transmission between functional boards of the secondary power control and protection apparatus to better resist strong electromagnetic interference. Additionally, based on the characteristic that a VPX bus can support high-speed serial communication protocols, high-speed signals are transmitted via the third data connector, increasing the data transmission bandwidth of the backplane of the secondary power control and protection apparatus, thereby addressing the issue of data bandwidth limitations between the functional boards in current secondary power control and protection apparatuses, improving the data exchange capability of secondary power control and protection apparatuses, and enhancing data throughput.

The following describes the secondary power control and protection apparatus and the backplane thereof based on the PowerVPX architecture provided by embodiments of this application with specific embodiments.

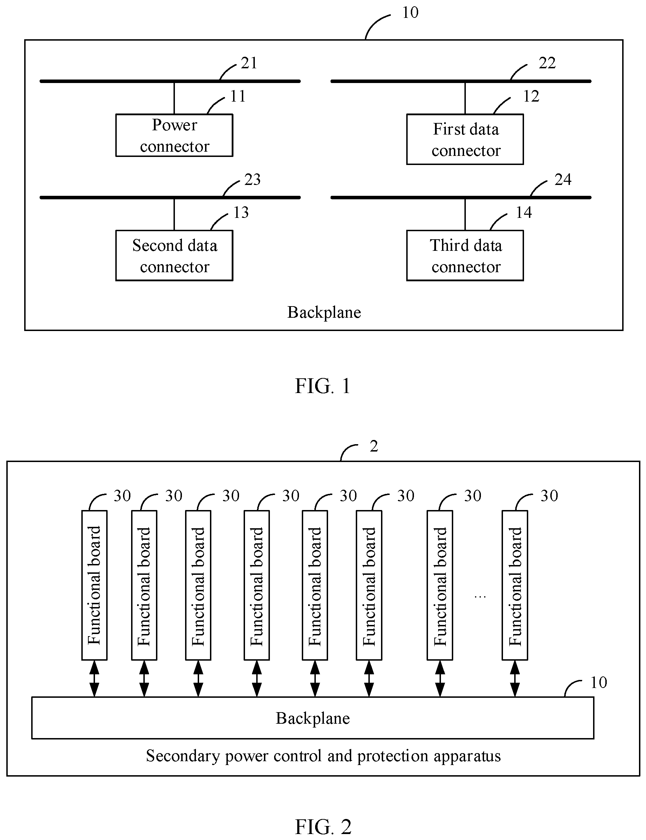

Referring to FIG. 1, FIG. 1 is a schematic diagram of a backplane based on a PowerVPX architecture according to an embodiment of this application. As shown in FIG. 1, the backplane 10 includes a power connector 11, a first data connector 12, a second data connector 13, and a third data connector 14.

The power connector 11 is connected to a power bus 21 and configured to transmit power signals; the first data connector 12 is connected to a single-ended signal transmission bus 22 and configured to transmit single-ended signals; the second data connector 13 is connected to a differential signal transmission bus 23 and configured to transmit differential signals; and the third data connector 14 is connected to a high-speed signal transmission bus 24 and configured to transmit high-speed signals.

It can be understood that in this embodiment of this application, the power connector provides a transmission channel for transmitting power signals for various functional boards, the first data connector provides a transmission channel for transmitting single-ended signals between the functional boards, the second data connector provides a transmission channel for transmitting differential signals between the functional boards, and the third data connector provides a transmission channel for transmitting high-speed signals between the functional boards.

In this embodiment of this application, signals transmitted on the backplane based on a PowerVPX architecture are divided into four types, which are the power signals, the high-speed signals, the single-ended signals, and the differential signals.

In this embodiment of this application, the power signals are power supply voltages required for the operation of the functional boards in the secondary power control and protection apparatus. For example, the power supply voltages may be 48V, 24V, 12V, 5V, or the like. The high-speed signals are real-time data signals with a transmission rate of 1 Gbps or higher, transmitted between the secondary power control and protection apparatus and a device such as a control background system (for example, a human-machine interaction board). The single-ended signals are monitoring signals, slot position numbers, alarm signals, locking signals, or the like between a control management board and other boards within the secondary power control and protection apparatus. The differential signals refer to control information between the control management board and other boards within the secondary power control and protection apparatus, such as differential data with a transmission rate of 100 Mbps to 500 Mbps.

In this embodiment of this application, the backplane 10 can achieve the functions of the secondary power control and protection apparatus by inserting different universal boards. For example, a power board may be inserted into the backplane 10 to provide operating voltages required for other functional boards of the secondary power control and protection apparatus. For another example, by inserting a control management board, an input board, and an output board, input collection and output control for a secondary power device can be achieved. For another example, by inserting a control management board and a communication board, real-time data interaction between the secondary power control and protection apparatus and a control background system can be realized.

It can be seen that in this embodiment of this application, based on the characteristics of the secondary power control and protection apparatus, the backplane is provided with a first data connector, a second data connector, and a third data connector based on the PowerVPX architecture, single-ended signals are transmitted via a single-ended signal transmission bus, and differential signals are transmitted via a differential signal transmission bus, enabling signal transmission between various functional boards of the secondary power control and protection apparatus to better resist strong electromagnetic interference. Additionally, based on the characteristic that a VPX bus can support high-speed serial communication protocols, high-speed signals are transmitted via the third data connector, increasing the data transmission bandwidth of the backplane of the secondary power control and protection apparatus, thereby addressing the issue of data bandwidth limitations between functional boards in current secondary power control and protection apparatuses, improving the data exchange capability of secondary power control and protection apparatuses, and enhancing data throughput.

In one embodiment of this application, the backplane 10 includes a power board slot and a universal board slot.

The power board slot is used for inserting a power board, and the universal board slot is used for inserting an input/output universal board (I/O universal board).

In specific applications, the universal board includes at least one of an input board, an output board, and a communication board.

It should be noted that the backplane 10 may be provided with multiple power board slots and multiple input/output universal board slots. During configuration of the secondary power control and protection apparatus, users can select the types of boards to be inserted into the backplane 10, for example, selecting a power board, a control management board, an input board, and an output board, and then insert the power board into the power board slot and insert the control management board, input board, and output board into the universal board slots, respectively.

By providing the universal board slot, during the design of other boards except the power board, all functional boards can be designed according to unified board specifications, improving the compatibility and scalability of the functional boards in the secondary power control and protection apparatus.

In one embodiment of this application, a distribution spacing of several universal board slots in the backplane 10 is greater than a preset spacing.

The preset interference distance is a slot spacing that can reduce coupling between the planes, and the preset interference distance can be set based on the application environment.

During backplane layout, a distribution spacing between data board slots is set to be relatively large to minimize coupling between the planes.

On the basis of the backplane based on a PowerVPX architecture provided in the foregoing embodiments, an embodiment of this application further provides a secondary power control and protection apparatus.

Referring to FIG. 2, FIG. 2 is a schematic structural diagram of a secondary power control and protection apparatus according to an embodiment of this application. As shown in FIG. 2, the secondary power control and protection apparatus 2 may include various functional boards 30 and the backplane 10.

Each of the functional boards 30 is inserted into the backplane 10.

Power signals, single-ended signals, differential signals, and high-speed signals between the functional boards 30 are transmitted via the backplane 10.

With reference to FIG. 1, in specific applications, it can be seen from the description of the backplane 10 that the backplane 10 is provided with a power connector 11, a first data connector 12, a second data connector 13, and a third data connector 14.

When the functional boards 30 are inserted into the backplane 10, power signals can be transmitted via the power connector 11 provided in the backplane 10, single-ended signals between the functional boards can be transmitted via the first data connector 12, differential signals between the functional boards can be transmitted via the second data connector 13, and high-speed signals between the functional boards can be transmitted via the third data connector 14.

In this embodiment of this application, the functional boards refer to boards configured to achieve the secondary power protection apparatus, such as a power board, a control management board, an input board, an output board, and a communication board.

In this embodiment of this application, the functional boards 30 may be configured based on the actual functions of the secondary power control and protection apparatus 2.

In this embodiment of this application, the secondary power control and protection apparatus utilizes the foregoing backplane, and the functional boards are inserted into the backplane, so that the functional boards can be selected based on actual needs and inserted into the backplane, achieving modularity, universality, and plug-and-play functionality of the boards. Single-ended signals between the functional boards can be transmitted via a single-ended signal transmission bus, and differential signals between the functional boards can be transmitted via a differential signal transmission bus, enabling signal transmission between the functional boards of the secondary power control and protection apparatus to better resist strong electromagnetic interference. Additionally, based on the characteristic that a VPX bus can support high-speed serial communication protocols, high-speed signals are transmitted via the third data connector, increasing the data transmission bandwidth between the functional boards of the secondary power control and protection apparatus, thereby addressing the issue of data bandwidth limitations between the functional boards in current secondary power control and protection apparatuses, improving the data exchange capability of secondary power control and protection apparatuses, and enhancing data throughput.

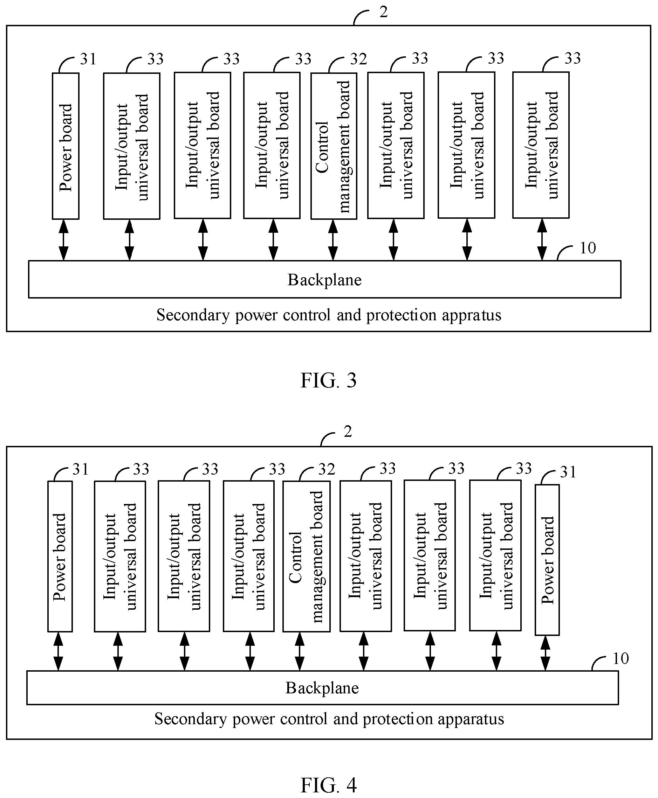

In one embodiment, referring to FIG. 3, FIG. 3 is a schematic architecture diagram of a secondary power control and protection apparatus according to an embodiment of this application. As shown in FIG. 3, the functional boards 30 include a power board 31. The power board 31 is configured to generate and output power signals.

The power signals may be operating voltages required for other functional boards, such as 48V, 24V, 12V, 5V, and the like. To be specific, the power board generates operating voltages such as 48V, 24V, 12V, and 5V, and then the operating voltages such as 48V, 24V, 12V, and 5V are outputted via the power connector 11 provided in the backplane 10 to supply power to the control management board and other functional boards.

In another embodiment of this application, as shown in FIG. 4, the functional boards 30 include at least two power boards 31 (FIG. 4 illustrates an example in which the functional boards include two power boards 31).

In specific applications, one of the at least two power boards 31 may serve as a main power supply board for the secondary power control and protection apparatus, while the other power board 31 serves as an auxiliary power supply board. Alternatively, different power boards 31 may output power signals with different voltage values to supply power to different functional boards.

In this embodiment of this application, the redundant design of the power boards allows for more reliable power supply of the secondary power protection and control apparatus.

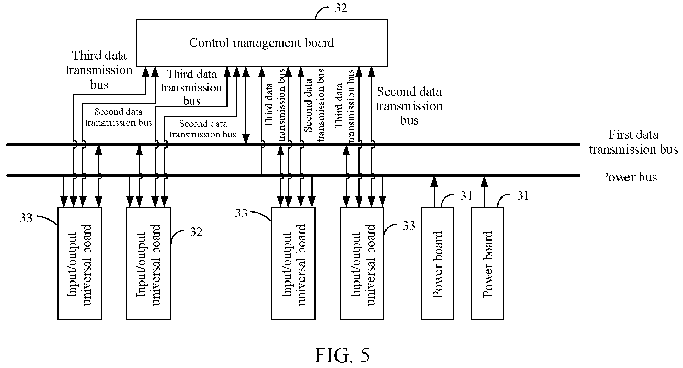

In one embodiment, referring to FIG. 3 and FIG. 5, FIG. 5 is a schematic architecture diagram of data transmission between a control management board and an input/output universal board of a secondary power control and protection apparatus according to an embodiment of this application. As shown in FIG. 5, the functional boards 30 further include a control management board 32 and an input/output universal board 33.

The control management board 32 is connected to the input/output universal board 33 via the first data connector 11, where single-ended signals are transmitted via a single-ended signal transmission bus 22.

In this embodiment, the single-ended signals include, but are not limited to, monitoring signals, slot position signals, alarm signals, and locking signals between the control management board 32 and the input/output universal board 33.

For example, when the input/output universal board 33 includes a communication board, an input board, and an output board, the control management board 33 transmits single-ended signals such as monitoring signals, slot position signals, alarm signals, and locking signals together with the communication board, input board, and output board, respectively.

In specific applications, the communication board is configured to interact with a control background, receiving or sending high-speed signals; the input board is configured to determine an input quantity, such as an opening/closing position of a disconnecting switch or an on/off state of a switch; and the output board is configured to output an output contact point via a relay, so as to achieve opening/closing of the disconnecting switch.

It should be noted that the monitoring signals are signals required by the control management board 32 to monitor an operating state of each input/output universal board 33. For example, the monitoring signals may be voltage signals and temperature signals of each input/output universal board 33.

In this embodiment of this application, the control management board 32 is also connected to the power board 31 via the first data connector 11, and the control management board 32 also transmits single-ended signals such as monitoring signals, slot position signals, and alarm signals between the control management board 32 and the power board 31 via the discrete data transmission bus 22.

In some embodiments, the single-ended signal transmission bus includes a CAN bus.

The CAN bus is arranged through the backplane 10, and the CAN bus is used to achieve single-ended signal transmission, also enhancing the reliability of the secondary power control and protection apparatus in strong electromagnetic interference scenarios.

It should be noted that the single-ended signal transmission bus may alternatively include other data buses, such as an RS485 bus, meaning the control management board 32 may alternatively transmit single-ended signals with the power board 31 and the input/output universal board 33 via the RS485 bus.

In this embodiment of this application, the control management board implements monitoring and control of other boards in the secondary power control and protection apparatus through the single-ended signals, achieving inter-board monitoring and inter-board maintenance.

Still referring to FIG. 3 and FIG. 5, in one embodiment, the control management board 32 is connected to the input/output universal board 33 via the second data connector 12, where differential signals are transmitted via the differential signal transmission bus 23.

The differential signals may be transmitted via a pair of differential signal lines, and the differential signals may be control information between the control management board and the input/output universal board within the secondary power control and protection apparatus, where the control information is differential data with a transmission rate of 100 Mbps to 500 Mbps.

In some application scenarios, the control management board 32 is further used for upgrade control of each input/output board.

To be specific, the control management board 32 transmits upgrade data (which are also differential signals) for program upgrading of the communication board, the input board, and the output board via the differential data transmission bus 23, thereby achieving upgrade control of other functional boards.

The control management board 32 is also connected to the power board 31 via the second data connector 12, and the control management board 32 also transmits control data between the control management board 32 and the power board 31 via the differential signal transmission bus 23.

In some application scenarios, the differential signal transmission bus 23 is respectively connected to the communication board, the input board, and the output board via a low-voltage differential signaling (Low-Voltage Differential Signaling, LVDS) bus.

It should be noted that the differential data transmission bus 23 may alternatively include other data buses, such as an M-LVDS data bus.

Still referring to FIG. 3 and FIG. 5, in one embodiment, the input/output universal board 33 includes a communication board 33a.

The control management board 32 is connected to the communication board 33a via the third data connector 14, where high-speed signals are transmitted via the high-speed signal transmission bus 24.

The high-speed signals are real-time data signals with a transmission rate of 1 Gbps or higher, transmitted between the secondary power control and protection apparatus and a device such as a control background system.

In the data plane, the high-speed signals are transmitted through the communication board 33a, enabling data interaction between the background system and the control management board of the secondary power control and protection apparatus.

In some application scenarios, the communication board may be an optical communication board.

In specific applications, the high-speed signal transmission bus 24 may include a gigabit transceiver (Gigabit Transceiver, GTX).

It should be noted that the high-speed signal transmission bus 24 may alternatively include other buses, such as a RapidIO high-speed serial bus.

In this embodiment of this application, a high-speed signal transmission channel is established for separation of a data channel and a control channel, increasing the data transmission bandwidth of the secondary power control and protection apparatus, improving the data transmission efficiency of the secondary power control and protection apparatus, and increasing the data throughput of the secondary power control and protection apparatus.

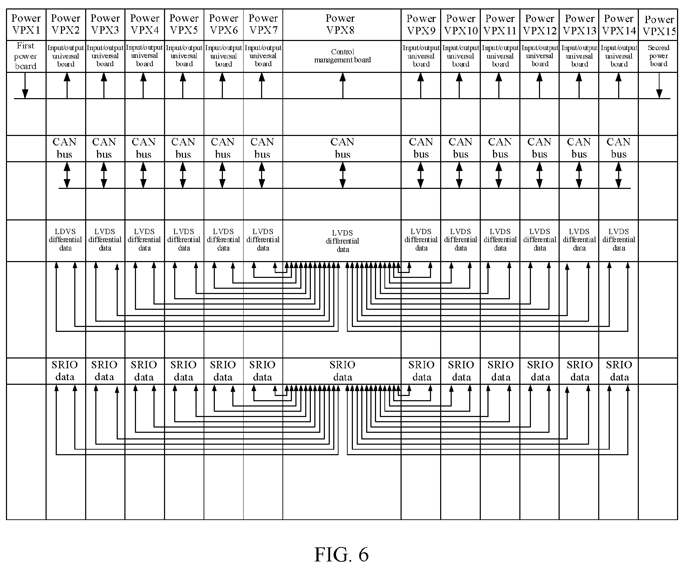

Based on the above description, the data transmission process between the functional boards of the secondary power control and protection apparatus provided by the embodiments of this application is described below. Referring to FIG. 6, in this example, the functional boards of the secondary power control and protection apparatus include a first power board, a second power board, a control management board 32, and eight input/output universal boards 33 as an example to illustrate data transmission relationships between the functional boards in the secondary power device provided by the embodiments of this application.

As shown in FIG. 6, the first power board and the second power board generate power signals and respectively output the power signals to the control management board 32 and the input/output universal boards 33 via a power bus, for supplying power to the control management board 32 and the input/output universal boards 33. The control management board 32 respectively transmits single-ended signals with the input/output universal boards 33 via a CAN bus. The control management board 32 respectively transmits differential signals with the input/output universal boards 33 via an LDVS bus. The control management board 32 respectively transmits high-speed signals with the input/output universal boards 33 via a RapidIO bus.

From the secondary power control and protection apparatus provided by the embodiments of this application, it can be seen that, based on the above description, the data transmission process between the functional boards of the secondary power control and protection apparatus provided by the embodiments of this application is described below. Referring to FIG. 6, in this example, the functional boards of the secondary power control and protection apparatus include a first power board, a second power board, a control management board, and twelve input/output universal boards as an example to illustrate data transmission relationships between the functional boards in the secondary power device provided by the embodiments of this application.

As shown in FIG. 6, the first power board and the second power board generate power signals and respectively output the power signals to the control management board and the input/output universal boards via a power bus, for supplying power to the control management board and the input/output universal boards. The control management board respectively transmits single-ended signals with the input/output universal boards via a CAN bus. The control management board respectively transmits LDVS differential data with the input/output universal boards. The control management board respectively transmits SRIO data with the input/output universal boards.

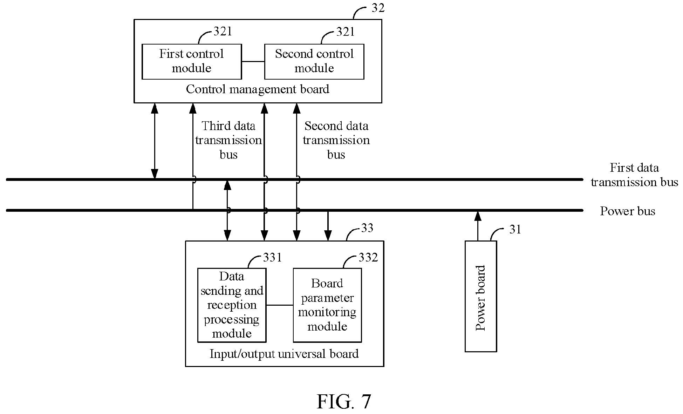

In one embodiment, referring to FIG. 7, the control management board 32 includes a first control module 321 and a second control module 322.

The first control module 321 is used for task management, data transmission management, and data communication processing based on the differential signals and high-speed signals.

The second control module 322 is used for board status monitoring based on the single-ended signals.

For example, the first control module 321 may include a first processing chip, where the first processing chip may be a system on chip (System on Chip, SOC), capable of performing operations for task management, data transmission management, and data communication processing.

In specific applications, the second control module 322 may include a baseboard management controller (Baseboard Management Controller, BMC). The baseboard management controller enables functions such as board temperature monitoring, power monitoring, and status monitoring.

It should be noted that specific processes of the task management, data transmission management, and data communication processing may be determined based on actual application scenarios of the secondary power control and protection apparatus. For different scenarios, the first control module can output different control signals to achieve the functions of the secondary power control and protection apparatus. For example, when opening/closing of a disconnecting switch needs to be controlled, a control signal is outputted to an output board, and the output board outputs an output contact point via a relay to achieve the opening/closing of the disconnecting switch.

In this embodiment of this application, the design of the double control modules improves the data processing efficiency of the control management board.

In one embodiment, still referring to FIG. 7, the input/output universal board 33 includes 331 and a board parameter monitoring module 332.

The data sending and reception processing module 331 is used for data sending and reception. The board parameter monitoring module 332 is configured to acquire operating parameters of the input/output universal board 33.

The operating parameters include, but are not limited to, operating voltage, and operating temperature.

In specific applications, the data sending and reception processing module 331 may include a field programmable gate array (Field Programmable Gate Array, FPGA). The field programmable gate array enables data sending and reception.

In specific applications, the board parameter monitoring module 332 may include a baseboard management controller (Baseboard Management Controller, BMC). The baseboard management controller enables the acquisition of the operating parameters of the boards.

In this embodiment of this application, the design of the double modules improves the data processing efficiency of the input/output universal board.

In one embodiment, the secondary power control and protection apparatus 2 further includes a chassis, and the backplane is disposed within the chassis.

In specific applications, the chassis includes, but is not limited to, a 3U chassis, a 4U chassis, and a 6U chassis.

In one embodiment, the secondary power control and protection apparatus includes a 4U chassis, where the 4U chassis is a chassis with width * height * depth of 482 (mm) * 177 (mm) * 291 (mm).

There are no standardly defined connectors and interfaces for 4U cabinets, 6U cabinets, backplanes, and various boards commonly used in secondary power devices, resulting in poor compatibility and scalability between secondary power devices produced by different manufacturers.

The VPX bus standard is a new-generation high-speed serial bus standard proposed by the VME (Versa Module Eurocard) International Trade Association (VME International Trade Association, VITA) based on VME buses. The OpenVPX system standard is a system definition standard, introducing the concept of "planes", and dividing the system into five planes: expansion plane, data plane, control plane, management plane, and general plane. The OpenVPX system standard is primarily used in computer embedded systems, providing standardized access for computer embedded systems.

However, since a secondary power device is mainly used in transformer substations, its application environments experience various electromagnetic interferences, such as transient electromagnetic interference from the opening/closing of high-voltage electrical devices, transient electromagnetic interference from short-circuit faults, and magnetic fields, radiation fields, and electrostatic fields around electrical devices. Due to these electromagnetic interferences in application of secondary power devices, the OpenVPX system standard cannot be directly applied in interface standardization for secondary power devices.

Based on the above considerations, to address the issue of poor compatibility and scalability in current secondary power devices, an embodiment of this application proposes a PowerVPX system architecture for a secondary power device based on the existing OpenVPX system standard, where the PowerVPX system architecture of the secondary power device is divided into a power plane, an electrical plane, a data plane, a protection plane, and a control plane. The power plane can transmit and process power signals, the electrical plane can transmit and process high-voltage signals, the protection plane can transmit and process single-ended signals, the data plane can transmit and process high-speed signals, and the control plane can transmit and process differential signals. The PowerVPX system architecture unifies the connection standards and PowerVPX system architecture for the secondary power device, improving the compatibility and scalability of the secondary power device. Additionally, by providing the electrical plane to transmit high-voltage signals in the secondary power device and providing the protection plane to transmit single-ended signals such as locking signals, alarm signals, and time synchronization signals in the secondary power device, the reliability of the secondary power device in strong electromagnetic interference scenarios can be effectively enhanced.

The following describes a secondary power device based on a PowerVPX system architecture provided by the embodiments of this application as well as the PowerVPX system architecture thereof with specific embodiments.

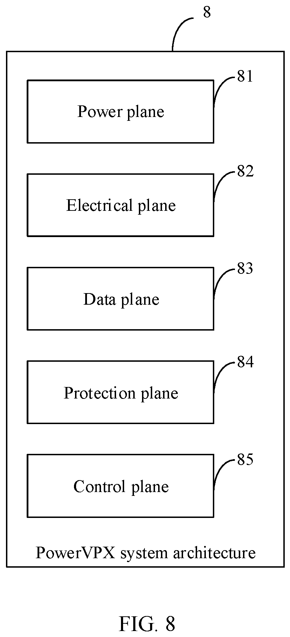

Referring to FIG. 8, FIG. 8 is a schematic architecture diagram of a PowerVPX system architecture of a secondary power device according to an embodiment of this application. As shown in FIG. 8, the PowerVPX system architecture 1 includes a power plane 81, an electrical plane 82, a data plane 83, a protection plane 84, and a control plane 85. The power plane 81 is used for transmitting and processing power signals, the electrical plane 82 is used for transmitting and processing high-voltage signals, the data plane 83 is used for transmitting and processing high-speed signals, the protection plane 84 is used for transmitting and processing single-ended signals, and the control plane 85 is used for transmitting and processing differential signals.

It can be understood that in this embodiment of this application, the "plane" in the "power plane", "electrical plane", "data plane", "protection plane", and "control plane" may refer to data transmission and processing channels (including but not limited to physical channels and logical channels) between secondary power devices or between modules within a secondary power device.

Specifically, the five planes correspond to different data transmission and processing channels, and accordingly, the five planes transmit and process different signals, respectively. That is, in this embodiment of this application, signals transmitted by the secondary power device are divided into five types, which are the power signals, the high-voltage signals, the high-speed signals, the single-ended signals, and the differential signals. The five planes each correspond to a transmission and processing channel for one type of signals.

In this embodiment of this application, the power signals are power supply voltages required for the operation of the modules in the secondary power device. For example, the power supply voltages may be 48V, 24V, 12V, 5V, and the like. The high-voltage signals are high-voltage control signals required for an operation mechanism of the secondary power device, such as 220V/110V direct-current high-voltage signals for controlling the opening/closing of the operation mechanism. The high-speed signals are real-time data signals with a transmission rate of 1 Gbps or higher, transmitted between the secondary power device and a device such as a control background system. The single-ended signals are discrete signals such as monitoring signals, slot position numbers, alarm signals, and locking signals between the control module and other functional modules within the secondary power device. The differential signals refer to control information between the control module and other functional modules within the secondary power device, which is differential data with a transmission rate of 100 Mbps to 500 Mbps.

In this embodiment of this application, different planes can be constructed based on various modules of the secondary power device. For example, the power plane may include construction of the power module of the secondary power device, to be specific, the operating voltages required for other modules in the secondary power device are outputted via the power module and the required operating voltages are inputted to the modules via the power plane, such as the operating voltages required for the collection module, the operating voltages required for the communication module, and the operating voltages required for the input/output module. For another example, the electrical plane may include the power module, the control module, the collection module, and the operation module (operation mechanism) of the secondary power device, where high-voltage signals between these modules are transmitted via the electrical plane, such as the 220V/110V direct-current high-voltage signals required for controlling the opening/closing of the operation mechanism. For another example, the data plane may include the control module and the communication module of the secondary power device, where the communication module and the control module transmit real-time data (with a transmission rate higher than 1 Gbps) via the data plane. For another example, the protection plane may include the control module and other functional modules of the secondary power device, where the control module and other modules transmits single-ended discrete signals (including but not limited to monitoring signals, slot position numbers, alarm signals, and locking signals) via the protection plane. For another example, the control plane includes the control module and other modules, where the control module and other modules transmits control information (including but not limited to upgrade data and differential control signals for upgrading the modules) via the control plane.

It should be noted that the modules included in the secondary power device may be determined based on actual functions of the secondary power device. For example, if the secondary power device is a measuring instrument, the secondary power device may include a power module, a control module, and a collection module. For another example, if the secondary power device is a circuit breaker control apparatus including a relay and an automatic apparatus, the secondary power device may include a power module, a control module, and an operation mechanism (for example, an A-phase operation mechanism, a B-phase operation mechanism, or a C-phase operation mechanism). For another example, if the secondary power device is a device which integrates multiple functions of a measuring instrument, a relay, an automatic apparatus, and the like, the secondary power device may include a power module, a control module, a collection module, and an operation mechanism.

It can be seen that in this embodiment of this application, the PowerVPX system architecture for the secondary power device is divided into five planes: a power plane, an electrical plane, a data plane, a protection plane, and a control plane. Each plane corresponds to the transmission and processing of a specific type of data, providing a standardized architecture for connection and data transmission between secondary power devices, effectively unifying connection standards between secondary power devices, and improving the compatibility and scalability of secondary power devices. Additionally, in consideration of the characteristic of strong electromagnetic interference in the usage scenarios of secondary power devices, the electrical plane is provided to transmit high-voltage signals of secondary power devices, and the protection plane is provided to transmit single-ended signals such as locking signals, alarm signals, and time synchronization signals in secondary power devices, effectively enhancing the reliability of secondary power devices in strong electromagnetic interference scenarios.

An embodiment of this application further provides a secondary power device. The secondary power device is primarily used in transformer substations. The secondary power device has current/voltage monitoring and protection functions, capable of performing protective actions and the like in case of faults or abnormalities in a primary power device.

The secondary power device may include a power module, a collection module, a communication module, an operation module, and a control module.

The power module is configured to generate power signals and transmit the power signals via a power plane. The collection module is configured to collect alternating-current signals and/or alternating-current voltage signals, convert the alternating-current signals and/or alternating-current voltage signals via an electrical plane to obtain low-voltage signals, and output the low-voltage signals to the control module. The communication module is used for real-time communication with an external device via a data plane. The operation module is configured to perform opening or closing operations based on high-voltage signals transmitted via the electrical plane. The control module is configured to transmit differential signals to the collection module, the communication module, and the operation module via a control plane, and transmit single-ended signals to the power module, the collection module, the communication module, and the operation module via a protection plane.

In specific applications, the modules can be achieved through a backplane and a functional board or through integrated circuit modules corresponding to the functions.

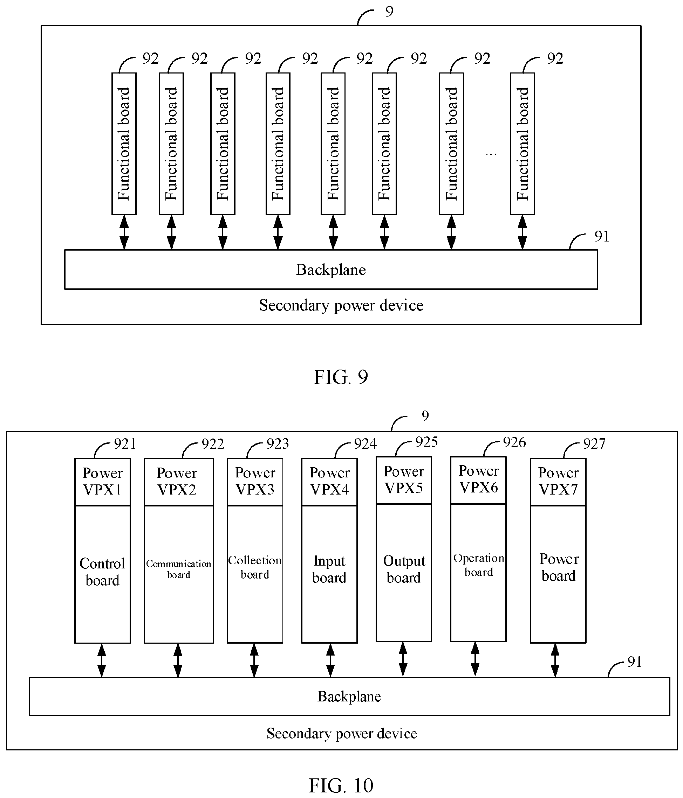

In some embodiments, referring to FIG. 9, FIG. 9 is a schematic structural diagram of a secondary power device according to an embodiment of this application. As shown in FIG. 9, the secondary power device 9 may include a backplane 91 and various functional boards 92. Each functional board 92 is inserted into the backplane 91.

The backplane 91 is configured to provide transmission channels for power signals, high-voltage signals, high-speed signals, single-ended signals, and differential signals, respectively.

In this embodiment of this application, buses are arranged on the backplane 21 based on a PowerVPX system architecture, thereby providing transmission and processing channels for the power signals, high-voltage signals, high-speed signals, single-ended signals, and differential signals via the backplane 91.

The buses include, but are not limited to, single-ended data transmission lines, low-voltage differential signaling (Low-Voltage Differential Signaling, LVDS) buses, power buses, RapidIO high-speed serial buses, and gigabit transceiver (Gigabit Transceiver, GTX) buses.

In this embodiment of this application, the functional boards 92 may be configured based on actual functions of the secondary power device 9. For example, if the secondary power device 9 is a measuring instrument, the functional boards 92 may include a power board, a control board, an alternating-current voltage collection board, and an alternating current collection board. For another example, if the secondary power device 9 is a circuit breaker control apparatus including a relay and an automatic apparatus, the functional boards may include a power board, a control board, an A-phase operation board, a B-phase operation board, a C-phase operation board, and the like. For another example, if the secondary power device 9 is a device which integrates multiple functions of a measuring instrument, a relay, an automatic apparatus, and the like, the functional boards 92 may include a power board, a control board, an alternating-current voltage collection board, an alternating current collection board, an A-phase operation board, a B-phase operation board, and a C-phase operation board.

For example, referring to FIG. 10, the functional boards 92 may include a control board 921, a communication board 922, a collection board 923, an input board 924, an output board 925, an operation board 926, and a power board 927.

In specific applications, the control board 921 may be a CPU management board, the communication board 922 may be an optical communication board, the collection board 923 may be an alternating-current voltage collection board and/or an alternating current collection board, and the operation board 926 may include operation boards of various phase, such as an A-phase operation board, a B-phase operation board, and a C-phase operation board.

In this embodiment of this application, transmission channels for various signals are provided on the backplane, the PowerVPX system architecture for the secondary power device is constructed using the backplane, and the functional boards can be selected based on actual needs and plugged into the backplane, achieving modularity, universality, and plug-and-play functionality of the boards.

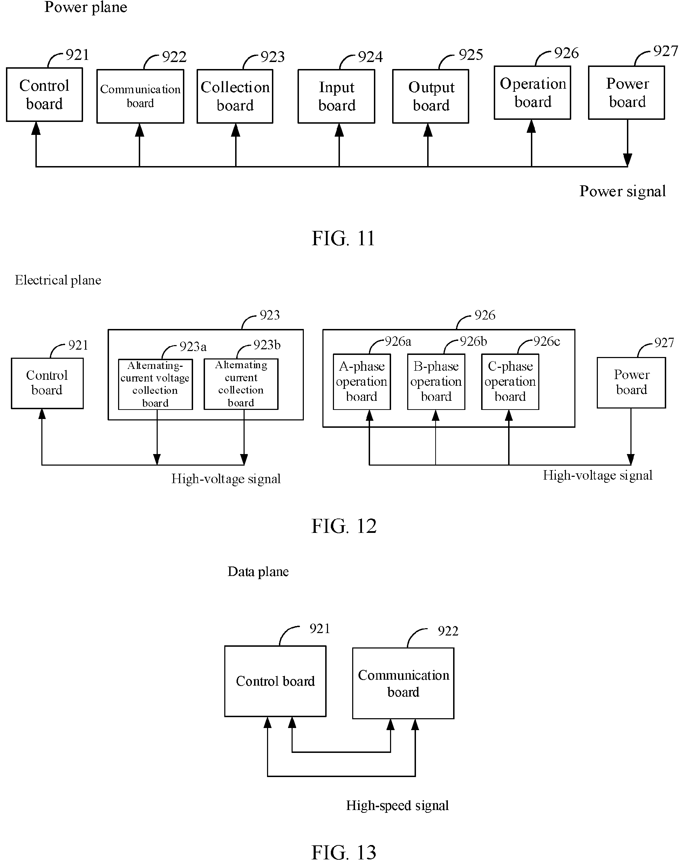

In one embodiment, referring to FIG. 11, FIG. 11 is a schematic architecture diagram of a power plane of a secondary power device according to an embodiment of this application. As shown in FIG. 11, the functional boards 92 include a power board 927. To be specific, the power module includes the power board 927, where the power board 927 is configured to generate and output power signals and output the power signals to other functional boards 92 via a power signal transmission channel provided by the backplane 91.

The power signals may be operating voltages required for other modules, for example, voltages such as 48V, 24V, 12V, and 5V. To be specific, in the power plane, the power board generates and outputs operating voltages such as 48V, 24V, 12V, and 5V to supply the voltages to the control board 921, communication board 922, collection board 923, input board 924, output board 925, and operation board 926.

In other embodiments, multiple power boards 927 may be selected to achieve the functions of the power plane, with one power board 927 serving as a main power supply board and another power board 927 serving as an auxiliary power supply board. Alternatively, different power boards 927 may output power signals with different voltage values to achieve the functions of the power plane.

In these embodiments of this application, the functions of the power plane are achieved through the selection of the functional boards, meeting the power supply needs of the secondary power device.

In one embodiment, referring to FIG. 12, FIG. 12 is a schematic architecture diagram of an electrical plane of a secondary power device according to an embodiment of this application. As shown in FIG. 12, the functional boards 92 include a power board 927, an operation board 926, a collection board 923, and a control board 921.

The power board 927 is configured to output direct-current high-voltage signals to the operation board 926, the collection board 923 is configured to collect alternating-current signals and/or alternating-current voltage signals, and the electrical plane is further configured to convert the alternating-current signals and/or alternating-current voltage signals into low-voltage signals and output the low-voltage signals to the control board 921 via a high-voltage signal transmission channel provided by the backplane 91.

The high-voltage signals transmitted in the electrical plane may be outputted by the power board 927. To be specific, direct-current high-voltage signals are outputted, including 220V and/or 110V direct-current high-voltage signals. The power board 927 outputs direct-current high-voltage signals to control the operation board 926 to perform opening/closing actions of a circuit breaker/disconnecting switch, achieving electrical control.

In some application scenarios, the operation board includes an A-phase operation board 926a, a B-phase operation board 926b, and a C-phase operation board 926c.

In specific applications, the power board 927 can output direct-current high-voltage signals to the A-phase operation board 926a, the B-phase operation board 926b, and the C-phase operation board 926c, respectively, to achieve opening/closing actions of an A-phase circuit breaker/disconnecting switch via the A-phase operation board 926a, achieve opening/closing actions of a B-phase circuit breaker/disconnecting switch via the B-phase operation board 926b, and achieve opening/closing actions of a C-phase circuit breaker/disconnecting switch via the C-phase operation board 926c.

The high-voltage signals transmitted in the electrical plane may alternatively be inputted by the collection board 923. To be specific, the collection board 923 collects high-voltage signals from a voltage transformer/current transformer, converts the high-voltage signals into low-voltage signals, and transmits the low-voltage signals to the control board 921 (for example, a CPU management board) via the electrical plane, achieving power parameter measurement.

The low-voltage signals are voltage signals with a voltage of 0 to 10V.

In some application scenarios, the collection board 923 includes an alternating-current voltage collection board 923a and an alternating current collection board 923b.

In specific applications, the alternating-current voltage collection board 923a converts 100V high-voltage signals from a voltage transformer into low-voltage signals and transmits the collected values to the control board 921 via the electrical plane. The alternating current collection board 923b converts voltage values from a 1A/5A current transformer into low-voltage signals and transmits the low-voltage signals to the control board 921.

In other embodiments, the functions of the electrical plane may be achieved by selecting corresponding functional boards based on actual application scenarios. For example, for a secondary power device with measurement needs, the functions of the electrical plane may be achieved by selecting only the collection board 923 and the control board 921. For a secondary power device with automatic control needs, the functions of the electrical plane may be achieved by selecting the power board 927 and the operation board 926.

In these embodiments of this application, based on the characteristics of the secondary power device, the functions of the electrical plane are achieved using corresponding functional boards, enabling parameter measurement and electrical control, and effectively enhancing the reliability of secondary power device in strong electromagnetic interference scenarios.

In one embodiment, referring to FIG. 13, FIG. 13 is a schematic architecture diagram of a data plane of a secondary power device according to an embodiment of this application. As shown in FIG. 13, the functional boards 92 include a communication board 922 and a control board 921. The communication module may include the communication board 922 and the control board 921. The communication board 922 is configured to interact with a control background, receiving or sending high-speed signals, and transmitting the received high-speed signals to the control board 921 via a high-speed signal transmission channel provided by the backplane 91.

The high-speed signals are real-time data signals with a transmission rate of 1 Gbps or higher, transmitted between the secondary power device and a device such as a control background system.

In the data plane, high-speed signal transmission is achieved through the communication board 922, enabling data interaction between the background system and the control board of the secondary power device.

In some application scenarios, the communication board may be an optical communication board.

In specific applications, the backplane 91 can achieve data transmission between the communication board and the control board via a gigabit transceiver (Gigabit Transceiver, GTX).

In other embodiments, high-speed signal transmission in the data plane can be achieved using serial buses such as a RapidIO high-speed serial bus.

In these embodiments of this application, a high-speed signal transmission channel is established for separation of a data channel and a control channel, enabling high-speed signal transmission via the data plane.

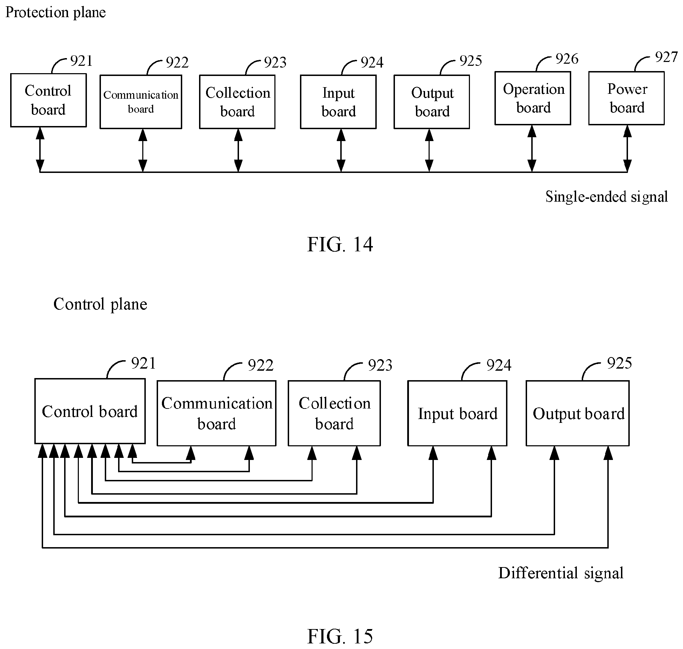

In one embodiment, referring to FIG. 14, FIG. 14 is a schematic architecture diagram of a protection plane of a secondary power device according to an embodiment of this application. As shown in FIG. 14, the functional boards 92 include a control board 921, a communication board 922, a collection board 923, an input board 924, an output board 925, an operation board 926, and a power board 927, where the control board 921 respectively interacts with the communication board 922, collection board 923, input board 924, output board 925, operation board 926, and power board 927 via the protection plane for single-ended signal interaction.

The single-ended signals are signals transmitted via a single signal line, including but not limited to discrete signals such as monitoring signals, slot position numbers, alarm signals, and locking signals between the control board 921 and other functional boards, for example, monitoring signals between the control board 921 and the input board 924, locking signals between the control board 921 and the operation board 926, and slot position numbers corresponding to the functional board which are acquired by the control board 921.

The protection plane enables the control board to monitor and control other boards in the secondary power device, achieving inter-board monitoring and inter-board maintenance.

In specific applications, the input board 924 is configured to determine an input quantity, such as an opening/closing position of a disconnecting switch or an on/off state of a switch, and the output board 925 is configured to output an output contact point via a relay, so as to achieve opening/closing of the disconnecting switch.

In some application scenarios, the control board 921 is respectively in communication connection with the communication board 922, collection board 923, input board 924, output board 925, operation board 926, and power board 927 via a CAN bus.

The CAN bus is arranged through the backplane 91, and the CAN bus is used to achieve single-ended signal transmission, also enhancing the reliability of the secondary power device in strong electromagnetic interference scenarios.

It should be noted that the control board 921 may also respectively transmit single-ended signals with the communication board 922, collection board 923, input board 924, output board 925, operation board 926, and power board 927 via other data buses, such as an RS485 bus.

In other embodiments, the functions of the protection plane may be achieved by selecting corresponding functional boards based on actual application scenarios. For example, for a secondary power device with measurement needs, the functions of the protection plane may be achieved by the control board 921 transmitting single-ended signals with only the collection board 923 and the power board 927. For another example, for a secondary power device with automatic control needs, the functions of the protection plane may be achieved by the control board 921 transmitting single-ended signals with only the power board 927 and the operation board 926.

In one embodiment, referring to FIG. 15, FIG. 15 is a schematic architecture diagram of a control plane of a secondary power device according to an embodiment of this application. As shown in FIG. 15, the functional boards 92 include a control board 921, a communication board 922, a collection board 923, an input board 924, and an output board 925.

The control board 921 respectively interacts with the communication board 922, collection board 923, input board 924, and output board 925 via the control plane for differential signal interaction.

The differential signals may be transmitted via a pair of differential signal lines, and the differential signals may be control information between the control board and other functional boards within the secondary power device, where the control information is differential data with a transmission rate of 100 Mbps to 500 Mbps.

In some application scenarios, the control board 921 is further configured to perform program upgrading for the communication board 922, collection board 923, input board 924, and output board 925, respectively.

To be specific, the control board 921 transmits upgrade data (which are also differential signals) for program upgrading of the communication board 922, collection board 923, input board 924, and output board 925 via the control plane, achieving upgrade control of other functional boards.

In some application scenarios, the control board 921 is respectively in communication connection with the communication board 922, collection board 923, input board 924, and output board 925 via a low-voltage differential signaling (Low-Voltage Differential Signaling, LVDS) bus.

In other embodiments, the functions of the control plane may be achieved by selecting corresponding functional boards based on actual application scenarios. For example, for a secondary power device with measurement needs, the functions of the control plane may be achieved by the control board 921 transmitting differential signals with only the collection board 923.

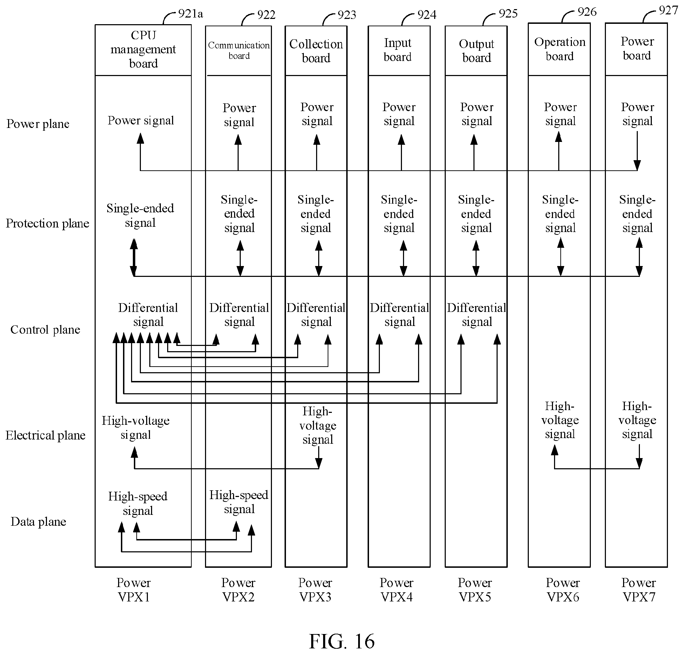

Based on the above description, the following describes the functional boards related to the planes of the secondary power device provided by the embodiments of this application with reference to Example 1. Referring to FIG. 16, in Example 1, the functional boards of the secondary power device include a CPU management board 921a, an optical communication board 922a, a collection board 923, an output board 925, an input board 924, an operation board 926, and a power board 927 as an example to illustrate data transmission relationships of the power plane, electrical plane, data plane, protection plane, and control plane provided by the embodiments of this application.

As shown in FIG. 16, in the power plane, the power board 927 respectively outputs power signals to the CPU management board 921a, communication board 922, collection board 923, output board 925, input board 924, and operation board 926, supplying power to the CPU management board 921a, communication board 922, collection board 923, output board 925, input board 924, and operation board 926. In the electrical plane, the power board 927 outputs high-voltage signals to the operation board 926, and the collection board 923 outputs high-voltage signals to the CPU management board 921a. In the data plane, the CPU management board 921a and the communication board 922 transmit high-speed signals. In the protection plane, the CPU management board 921a transmits single-ended signals with the communication board 922, collection board 923, output board 925, input board 924, operation board 926, and power board 927, respectively. In the control plane, the CPU management board 921a transmits differential signals with the communication board 922, collection board 923, output board 925, and input board 924, respectively.

It can be seen that the secondary power device provided by the embodiments of this application can respectively transmit corresponding signals based on the five planes, effectively unifying the connection standards between secondary power devices and improving the compatibility and scalability of secondary power devices. Additionally, in consideration of the characteristic of strong electromagnetic interference in the usage scenarios of secondary power devices, the electrical plane is provided to transmit high-voltage signals of secondary power devices, and the protection plane is provided to transmit single-ended signals such as locking signals, alarm signals, and time synchronization signals in secondary power devices, effectively enhancing the reliability of secondary power devices in strong electromagnetic interference scenarios.

In one embodiment of this application, the backplane 91 of the secondary power device may be provided with a power board slot and several data board slots.

The power board slot is used for inserting the power board.

Each of the data board slots is used for inserting any one functional board of a control board, an input board, an output board, a communication board, a collection board, and an operation board.

In some embodiments, data connection channels of the several data board slots are the same.

The backplane may be provided with multiple power board slots to achieve power redundancy design. The several data board slots may be arranged in rows and columns on the backplane 91, achieving ordered overall layout and simple connection of the backplane 91.

In these embodiments of this application, unified and standardized interfaces are achieved through unified data board slots. Even secondary power devices produced by different manufacturers can use the same data board slots, thereby improving the compatibility and scalability of the secondary power devices.

In one embodiment, a distribution spacing of the several data board slots is greater than a preset interference distance.

The preset interference distance is a slot spacing that can reduce coupling between the planes, and the preset interference distance may be set based on the application environment.

During backplane layout, the distribution spacing between the data board slots is set to be relatively large to minimize coupling between the planes.

In one embodiment, the secondary power device further includes a chassis; and the backplane is disposed within the chassis.

In specific applications, the chassis includes, but is not limited to, a 3U chassis, a 4U chassis, and a 6U chassis.

In several embodiments provided by this application, it should be understood that the disclosed apparatus and device can be achieved in other ways. For example, the apparatus embodiments described above are merely illustrative. For example, the division of modules or units is only a logical function division, and in actual implementation, there may be other division methods, such as combining multiple units or components or integrating them into another apparatus, or some features may be omitted or not implemented. In addition, the coupling or direct coupling or communication connection shown or discussed may be indirect coupling or communication connections through some interfaces, apparatuses, or units, and may be electrical, mechanical, or in other forms.

Finally, it should be noted that the above descriptions are only specific implementations of this application, but the protection scope of this application is not limited thereto. Any changes or substitutions within the technical scope disclosed by this application should be covered by the protection scope of this application. Therefore, the protection scope of this application shall be subject to the protection scope of the claims.

## Claims

1. A backplane, comprising:
a power connector, connected to a power bus and configured to transmit power signals;
a first data connector, connected to a single-ended signal transmission bus and configured to transmit single-ended signals;
a second data connector, connected to a differential signal transmission bus and configured to transmit differential signals; and
a third data connector, connected to a high-speed signal transmission bus and configured to transmit high-speed signals.

2. The backplane according to claim 1, wherein the backplane comprises a power board slot and a universal board slot;
the power board slot is used for inserting a power board; and
the universal board slot is used for inserting an input/output universal board.

3. The backplane according to claim 2, wherein the universal board comprises at least one of an input board, an output board, or a communication board.

4. The backplane according to claim 2 or 3, wherein a distribution spacing of several universal board slots is greater than a preset interference distance.

5. A secondary power control and protection apparatus, wherein the secondary power control and protection apparatus comprises various functional boards and the backplane according to any one of claims 1 to 4; and
each of the functional boards is inserted into the backplane, and power signals, single-ended signals, differential signals, and high-speed signals between the functional boards are transmitted via the backplane.

6. The secondary power control and protection apparatus according to claim 5, wherein the functional boards comprise a power board; and
the power board is connected to the power connector and configured to generate and output power signals.

7. The secondary power control and protection apparatus according to claim 5, wherein the functional boards comprise at least two power boards; and
each of the power boards is independently connected to the power connector.

8. The secondary power control and protection apparatus according to any one of claims 5 to 7, wherein the functional boards further comprise a control management board and an input/output universal board; and
the control management board is connected to the input/output universal board via a first data connector, wherein single-ended signals are transmitted via a single-ended signal transmission bus.

9. The secondary power control and protection apparatus according to claim 8, wherein the single-ended signal transmission bus comprises a CAN bus.

10. The secondary power control and protection apparatus according to claim 8, wherein the control management board is connected to the input/output universal board via a second data connector, wherein differential signals are transmitted via a differential signal transmission bus.

11. The secondary power control and protection apparatus according to claim 10, wherein the differential signal transmission bus comprises a low-voltage differential signal bus.

12. The secondary power control and protection apparatus according to claim 8, wherein the input/output universal board comprises a communication board; and
the control management board is connected to the communication board via a third data connector, wherein high-speed signals are transmitted via a high-speed signal transmission bus.

13. The secondary power control and protection apparatus according to claim 12, wherein the high-speed signal transmission bus comprises a high-speed serial communication bus.

14. The secondary power control and protection apparatus according to any one of claims 8 to 13, wherein the control management board comprises a first control module and a second control module;
the first control module is used for task management, data transmission management, and data communication processing based on the differential signals and the high-speed signals; and
the second control module is used for board status monitoring based on the single-ended signals.

15. The secondary power control and protection apparatus according to claim 14, wherein the input/output universal board comprises a data sending and reception processing module and a board parameter monitoring module;
the data sending and reception processing module is used for data sending and reception;
the board parameter monitoring module is used to acquire operating parameters of the input/output universal board.

16. The secondary power control and protection apparatus according to any one of claims 5 to 15, wherein the secondary power control and protection apparatus further comprises a chassis; and
the backplane and the functional boards are disposed within the chassis.

17. The secondary power control and protection apparatus according to claim 16, wherein the chassis comprises a 4U chassis.

18. A PowerVPX system architecture applied to a secondary power device, wherein the PowerVPX system architecture comprises:
a power plane for transmitting and processing power signals;
an electrical plane for transmitting and processing high-voltage signals;
a data plane for transmitting and processing high-speed signals;
a protection plane for transmitting and processing single-ended signals; and
a control plane for transmitting and processing differential signals.

19. A secondary power device, comprising:
a power module for generating power signals and transmitting the power signals via a power plane;
a collection module for collecting alternating-current signals and/or alternating-current voltage signals, converting the alternating-current signals and/or alternating-current voltage signals via an electrical plane to obtain low-voltage signals, and outputting the low-voltage signals to a control module;
a communication module for real-time communication with an external device via a data plane;
an operation module for performing opening or closing operations based on high-voltage signals transmitted via the electrical plane; and
a control module for transmitting differential signals to the collection module, the communication module, and the operation module via a control plane, and transmitting single-ended signals to the power module, the collection module, the communication module, and the operation module via a protection plane.

20. The secondary power device according to claim 19, wherein the secondary power device comprises a backplane and various functional boards;
each of the functional boards is inserted into the backplane; and
the backplane is configured to provide transmission and processing channels for the power signals, high-voltage signals, high-speed signals, single-ended signals, and differential signals, respectively.

21. The secondary power device according to claim 20, wherein the power module comprises a power board; and
the power board is configured to generate power signals and output the power signals via a power signal transmission channel provided by the backplane.

22. The secondary power device according to claim 10, wherein the power module comprises a power board, the operation module comprises an operation board, the collection module comprises a collection board, and the control module comprises a control board;
the power board is configured to output direct-current high-voltage signals to the operation board; and
the collection board is configured to collect alternating-current signals and/or alternating-current voltage signals, the electrical plane is further configured to convert the alternating-current signals and/or alternating-current voltage signals into low-voltage signals, and the low-voltage signals are outputted to the control board via a high-voltage signal transmission channel provided by the backplane.

23. The secondary power device according to claim 22, wherein the collection board comprises an alternating current collection board and an alternating-current voltage collection board.

24. The secondary power device according to claim 22, wherein the operation board comprises an A-phase operation board, a B-phase operation board, and a C-phase operation board.

25. The secondary power device according to claim 20, wherein the communication module comprises a communication board and a control board; and
the communication board is configured to interact with a control background, receive or send the high-speed signals, and transmit the received high-speed signals to the control board via the data plane provided by the backplane.

26. The secondary power device according to claim 20, wherein the control module comprises a control board, the operation module comprises an input board, an output board, and an operation board, the communication module comprises a communication board, the collection module comprises a collection board, and the power module comprises a power board; and
the control board respectively interacts with the input board, the output board, the communication board, the collection board, the operation board, and the power board via the protection plane for single-ended signal interaction.

27. The secondary power device according to claim 26, wherein the control board is respectively in communication connection with the input board, the output board, the communication board, the collection board, the operation board, and the power board via a CAN bus.

28. The secondary power device according to claim 20, wherein the control module comprises a control board, the operation module comprises an input board and an output board, the communication module comprises a communication board, and the collection module comprises a collection board; and
the control board respectively interacts with the input board, the output board, the communication board, and the collection board via the control plane for differential signal interaction.

29. The secondary power device according to claim 28, wherein the control board is further configured to perform program upgrading for the input board, the output board, the communication board, and the collection board, respectively.

30. The secondary power device according to claim 28 or 29, wherein the control board is respectively in communication connection with the input board, the output board, the communication board, and the collection board via a low-voltage differential signal bus.

31. The secondary power device according to any one of claims 20 to 30, wherein the backplane comprises a power board slot and several data board slots;
the power board slot is used for inserting the power board; and
each of the data board slots is used for inserting any functional board of a control board, an input board, an output board, a communication board, a collection board, and an operation board.

32. The secondary power device according to claim 31, wherein data connection channels of the several data board slots are the same.

33. The secondary power device according to claim 31 or 32, wherein a distribution spacing of the several data board slots is greater than a preset interference distance.

34. The secondary power device according to any one of claims 20 to 33, wherein the secondary power device further comprises a chassis; and
the backplane is disposed within the chassis.
